(19) **Europäisches Patentamt / European Patent Office / Office européen des brevets**

(11) **EP 4 082 850 A1**

(12) **EUROPEAN PATENT APPLICATION**
published in accordance with Art. 153(4) EPC

(43) Date of publication:
**02.11.2022 Bulletin 2022/44**

(21) Application number: **20908581.0**

(22) Date of filing: **27.10.2020**

(51) International Patent Classification (IPC):
**B60W 30/09** (2012.01) **B60W 30/095** (2012.01)
**B60W 60/00** (2020.01)

(86) International application number:
**PCT/CN2020/123797**

(87) International publication number:
**WO 2021/135566 (08.07.2021 Gazette 2021/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.12.2019 CN 201911409229**

(71) Applicant: **Huawei Technologies Co., Ltd.**
**Longgang**
**Shenzhen, Guangdong 518129 (CN)**

(72) Inventor: **LI, Huaizhou**
**Shenzhen, Guangdong 518129 (CN)**

(74) Representative: **Körber, Martin Hans**
**Mitscherlich PartmbB**
**Patent- und Rechtsanwälte**
**Sonnenstraße 33**
**80331 München (DE)**

(54) **VEHICLE CONTROL METHOD AND APPARATUS, CONTROLLER, AND SMART VEHICLE**

(57) A vehicle control method and apparatus in the field of automated driving are disclosed in this application. The method includes: obtaining a first recognition result of a target object, where the first recognition result includes: a first probability that the target object belongs to a first category and a second probability that the target object belongs to a second category, and the first probability is greater than the second probability; adjusting the first recognition result to obtain a second recognition result of the target object, where the second recognition result includes a third probability that the target object belongs to the second category, and the third probability is greater than the second probability; and controlling a vehicle based on the second recognition result. This improves driving safety of the vehicle.

S210: Obtain a first recognition result of a target object, where the first recognition result includes: a first probability that the target object belongs to a first category and a second probability that the target object belongs to a second category, and the first probability is greater than the second probability

S220: Adjust the first recognition result to obtain a second recognition result of the target object, where the second recognition result includes: a third probability that the target object belongs to the second category; and the third probability is greater than the second probability

S230: Control the vehicle based on the second recognition result

FIG. 2

**Description**

This application claims priority to Chinese Patent Application No. 201911409229.X, filed with the China National Intellectual Property Administration on December 31, 2019 and entitled "VEHICLE CONTROL METHOD AND APPARATUS, CONTROLLER, AND INTELLIGENT VEHICLE", which is incorporated herein by reference in its entirety.

**TECHNICAL FIELD**

This application relates to the intelligent vehicle (smart/intelligent car) field, and in particular, to a vehicle control method and apparatus, a controller, and an intelligent vehicle in automated driving (automated driving, ADS).

**BACKGROUND**

Artificial intelligence (artificial intelligence, AI) is simulating, extending, and expanding human intelligence by using a digital computer or a machine controlled by a digital computer. As an artificial intelligence technology is applied to the intelligent vehicle field, an automated driving function attracts attention of more manufacturers.

An automated driving technology relies on computer vision, radar, a monitoring apparatus, and a global positioning system to implement automated driving of an intelligent vehicle. Currently, in the automated driving technology, a probability of each of a plurality of categories to which one target object belongs needs to be obtained, which relies on a sensing module and uses a deep learning algorithm. Then a category with a highest probability is used as a final recognition result of the target object to plan a driving route for the intelligent vehicle. Object data used to learn a correspondence between an object feature and a category to which an object belongs cannot be completely the same as object data in an actual application scenario. Therefore, when the deep learning algorithm is used to recognize categories to which a target object in an actual application scenario belongs and probabilities that the target object belongs to the categories, false recognition usually occurs. That is, when the target object actually belongs to a specific category, a probability that the target object belongs to another category is greater than a probability that the target object belongs to a real category of the target object, where the probabilities are obtained through deep learning algorithm recognition. For example, when a target object is actually an elderly person, the following recognition results may be obtained when the target object is recognized by using the deep learning algorithm: A first category to which the target object belongs is the adolescent, and a probability is 0.9; a second category is the middle-aged, and a probability is 0.8; and a third category is the elderly, and a probability is 0.7. When a probability of the real category of the target object is less than a probability of another category, using a category with the highest probability as a final category of the target object and planning a route of the vehicle based on the category inevitably cause a deviation of the planned route, where the probabilities are obtained through deep learning algorithm recognition. Consequently, a safety accident occurs, and a person is hurt or a vehicle is damaged. For example, when the route of the intelligent vehicle is planned based on the foregoing false recognition result, that is, when the category "adolescent" with the highest probability is used as the category of the target object to plan the route for the intelligent vehicle, because characteristics such as a moving speed of an adolescent and that of an elderly person are different, a safety accident in which the intelligent vehicle collides with the target object is most likely to occur if a safe space (that is, a safe route) of the intelligent vehicle is determined based on the moving speed of the adolescent. Therefore, how to provide a safer vehicle control method becomes an urgent technical problem to be resolved.

**SUMMARY**

This application provides a vehicle control method and apparatus, a controller, and an intelligent vehicle, to help improve driving safety of a vehicle.

According to a first aspect, this application provides a vehicle control method. The method includes: obtaining a first recognition result of a target object, where the first recognition result includes: a first probability that the target object belongs to a first category and a second probability that the target object belongs to a second category, and the first probability is greater than the second probability; adjusting the first recognition result to obtain a second recognition result of the target object, where the second recognition result includes: a third probability that the target object belongs to the second category, and the third probability is greater than the second probability; and controlling a vehicle based on the second recognition result.

According to the vehicle control method in this application, a route is not directly planned based on a recognition result of a deep learning algorithm to control travelling of an intelligent vehicle, but planned by adjusting the recognition result of the deep learning algorithm, to avoid a case in which a probability of a real category of a target object is less than a probability of another category of the target category. In this way, if the route is planned and travelling of the intelligent vehicle is controlled based on an adjusted recognition result, travelling safety of the intelligent vehicle can be improved.

In some possible implementations, the adjusting the first recognition result includes: adjusting the first recognition result based on a preconfigured probability adjustment parameter.

In some possible implementations, both the first probability and the second probability are probabilities obtained by classifying the target object by a neural network. The probability adjustment parameter is determined based on a first false detection probability and a first false recognition severity, where the first false detection probability is a probability that the neural network classifies a second-category target object into the first category, and the first false detection severity is a severity level of a safety hazard caused by using the first category as a real category of the second-category target object to control the vehicle.

In some possible implementations, both the first probability and the second probability are probabilities obtained by classifying the target object by a neural network, and the method further includes: determining a probability adjustment parameter based on a first false detection probability and a first false recognition severity, where the first false detection probability is a probability that the neural network classifies a second-category target object into the first category, and the first false recognition severity is a severity level of a safety hazard caused by using the first category as a real category of the second-category target object to control the vehicle. The adjusting the first recognition result includes: adjusting the first recognition result based on the probability adjustment parameter.

In some possible implementations, the probability adjustment parameter, the first false detection probability, and the first false recognition severity satisfy the following relational expression: $\omega=(1-fp)*(s*0.1+1)$, where $\omega$ represents the probability adjustment parameter, fp represents the first false detection probability, and s represents the first false detection severity.

In some possible implementations, the third probability, the probability adjustment parameter, and the second probability satisfy the following relational expression: $P3=P2*\omega$, where P3 represents the third probability, P2 represents the second probability, and $\omega$ represents the probability adjustment parameter.

In some possible implementations, the controlling a vehicle based on the second recognition result includes: when the third probability in the second recognition result is greater than a probability that the target object belongs to another category, using the second category as a target category of the target object, and controlling the vehicle based on the target category.

According to a second aspect, this application provides an object recognition apparatus, where the apparatus includes modules configured to perform the vehicle control method in any one of the first aspect or the possible implementations of the first aspect.

According to a third aspect, this application provides a controller, where the controller includes: a memory, configured to store computer program code; and a processor, configured to execute a program stored in the memory. When the program stored in the memory is executed, the processor is configured to perform steps of the method in any one of the first aspect or the possible implementations of the first aspect.

According to a fourth aspect, this application provides an intelligent vehicle. The intelligent vehicle includes a controller, and the controller is configured to perform a function implemented by the controller in any one of the third aspect or the possible implementations of the third aspect.

According to a fifth aspect, this application provides a computer-readable medium, where the computer-readable medium stores instructions to be executed by a device, and the instructions are used to implement the method or the function in any one of the foregoing aspects or the possible implementations of the foregoing aspects.

According to a sixth aspect, this application provides a computer program product including instructions, and when the computer program product is run on a computer, the computer performs the method or the function in any one of the foregoing aspects or the possible implementations of the foregoing aspects.

According to a seventh aspect, this application provides a chip, where the chip includes a processor and a data interface, and the processor reads, through the data interface, an instruction stored in a memory, to perform the method or the function in any one of the foregoing aspects or the possible implementations of the foregoing aspects.

Optionally, in an implementation, the chip may further include the memory. The memory stores instructions. The processor is configured to execute the instructions stored in the memory. When the instructions are executed, the processor is configured to perform the method or the function in any one of the foregoing aspects or the possible implementations of the foregoing aspects.

According to an eighth aspect, this application provides a computing device. The computing device includes a processor and a memory. The memory stores computer instructions, and the processor executes the computer instructions to implement the method or the function in any one of the foregoing aspects or the possible implementations of the foregoing aspects.

In this application, based on the implementations according to the foregoing aspects, the implementations may be further combined to provide more implementations.

**BRIEF DESCRIPTION OF DRAWINGS**

FIG. 1 is a schematic diagram of a structure of an intelligent vehicle according to this application;
FIG. 2 is a schematic flowchart of a vehicle control method according to this application;
FIG. 3 is a schematic diagram of a structure of a vehicle control apparatus according to this application; and
FIG. 4 is a schematic diagram of a structure of a controller according to this application.

**DESCRIPTION OF EMBODIMENTS**

The following describes technical solutions in embodiments of this application with reference to accompanying drawings in embodiments of this application.

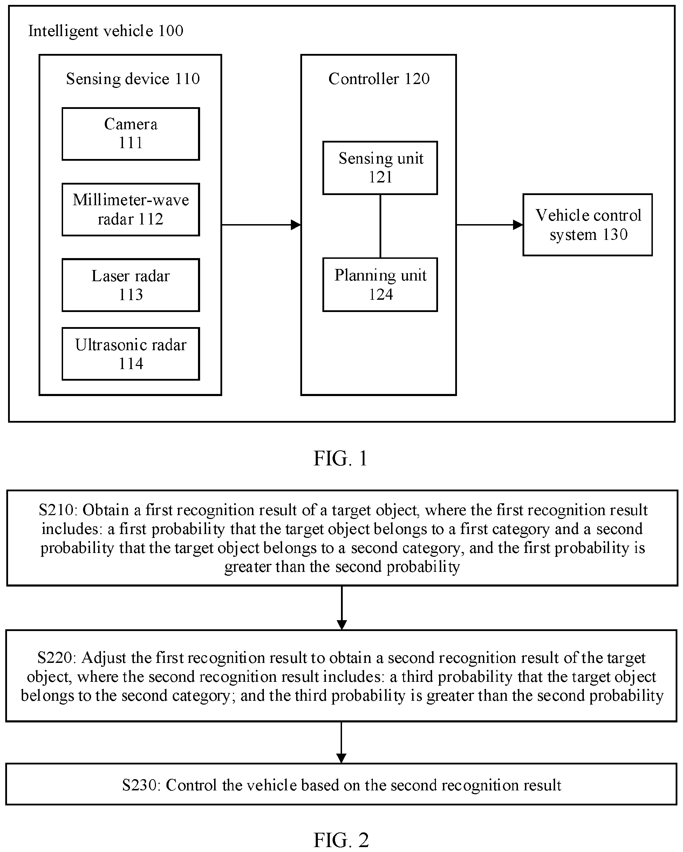

FIG. 1 is an example block diagram of a structure of an intelligent vehicle 100 according to an embodiment of this application. As shown in FIG. 1, the intelligent vehicle 100 includes a sensing device 110, a controller 120, and a vehicle control system 130. Collectively, the sensing device 110 and the controller 120 may also be referred to as an environment sensing module.

The sensing device 110 may include sensors such as a camera 111, a millimeter-wave radar 112, a laser radar 113, and an ultrasonic radar 114. The sensors in the sensing device 110 are configured to: sense an object outside the intelligent vehicle in different manners and from different angles, and transmit sensed data to the controller 120.

For example, the laser radar 113 may obtain point cloud data of space around the intelligent vehicle to implement environment modeling by using a laser ranging technology. The camera 111 usually collects an image by using a lens, and by using a photosensitive component circuit and a control component inside the camera, processes the image and converts the image into a digital signal that can be recognized by the controller 120, to help an automated driving system implement semantic segmentation and understanding of a scenario. The millimeter-wave radar 113 transmits a millimeter wave to the outside through an antenna, and receives a reflected signal of a target object. After being further processed by the controller 120, the reflected signal of the target object may help quickly and accurately obtain information about a physical environment around the intelligent vehicle. The ultrasonic radar 114 irradiates the target object by transmitting a sound wave, and receives an echo reflected by the target object. After echo information is processed by the controller 120, information of the target object such as a distance, a distance change rate (radial velocity), a size, or an orientation can be obtained.

The controller 120 includes a plurality of logical domains, and the plurality of logical domains may also be understood as mobile data centers (mobile data centers, MDCs). In the intelligent vehicle, one or more controllers that perform specific functions, for example, basic functions such as sensing and planning, are classified into one logical domain. The logical domain is managed by a unified controller.

A sensing unit 121 runs a specific sensing algorithm, and performs sensing on an environment around the intelligent vehicle based on the data transmitted by the sensing device 110. Environment sensing usually includes sensing a road surface, a static object, a dynamic object, and the like. Further, for the dynamic object, a track of the dynamic object needs to be tracked, and a subsequent track (a location) of the object is predicted based on a tracking result. A planning unit 124 may calculate a safe space of the intelligent vehicle based on information sensed by the sensing unit 121, that is, perform route planning for the intelligent vehicle. For example, after the sensing unit 120 senses, based on the data transmitted by the sensing device 110, that there is a pedestrian moving at a speed of three kilometers per hour at a specific distance ahead, the planning unit 124 may plan a safe route for the intelligent vehicle based on the information sensed by the sensing unit 121 and a moving speed of the vehicle body.

The vehicle control system 130 is connected to a line control system of the intelligent vehicle, and is configured to control systems of the intelligent vehicle such as a steering system, a power system, and a braking system based on the safe route planned by the planning unit 124.

In some examples, the sensing unit 120 can recognize an object in an environment around the intelligent vehicle by using a deep learning algorithm

For example, the sensing unit 120 may include a neural network. The neural network may be a general classification network, or a self-designed classification network. A parameter of the neural network may be obtained by training the neural network based on training data, and the parameter may also be referred to as a weight of the neural network.

For example, the training data may include image data of information such as a road sign, a pedestrian, a building, or a vehicle, and annotation data of the image data. The annotation data is used to annotate a category to which a target object in the image belongs. After the parameter is obtained by training the neural network based on the training data, the neural network can be used for image classification.

For example, in an actual application scenario, after image data collected by the camera of the intelligent vehicle is input to the neural network, the neural network can classify a target object in the image based on the parameter obtained through training, to obtain a category to which the target object in the image belongs and a probability that the target object belongs to the category. To be specific, the neural network can recognize a category to which a target object in an environment around the intelligent vehicle belongs and a probability that the target object belongs to the corresponding category.

Due to limitations of training data or a neural network, when categories to which a target object in an actual application scenario belongs and probabilities that the target object belongs to the categories are recognized by using a deep learning algorithm, false recognition usually occurs. That is, a probability of a real category is less than a probability of another category, where the probabilities are obtained through the recognition. In this case, if a route of the intelligent vehicle is planned based on a category with the highest probability, a deviation of the planned route is inevitably caused. Consequently, a safety accident occurs, and a person is hurt or a vehicle is damaged.

An example limitation of the training data is that object data used to learn a correspondence between an object feature and a category to which an object belongs cannot be completely the same as object data in an actual application scenario. An example limitation of the neural network is that a model structure of the neural network is inappropriate.

To resolve a problem in which safety of an intelligent vehicle is affected due to false recognition of a neural network, this application provides a vehicle control method. In this method, a route is not directly planned based on a recognition result of a deep learning algorithm to control travelling of an intelligent vehicle, but planned by adjusting (or referred to as correcting or compensating) the recognition result of the deep learning algorithm, to avoid a case in which a probability of a real category of a target object is less than a probability of another category of the target object. In this way, if the route is planned and travelling of the intelligent vehicle is controlled based on an adjusted recognition result, travelling safety of the intelligent vehicle can be improved.

In addition, according to the vehicle control method provided in this application, adjustment is performed on a result obtained through deep learning algorithm recognition, which has lower complexity, compared with adjustment to a model structure of a neural network and/or adjustment to training data of the neural network.

In some possible implementations, a probability of a category obtained through recognition may be adjusted based on a false recognition probability that a target object of one category is recognized as a target object of another category by using a deep learning algorithm. For example, in a result obtained through deep learning algorithm recognition, a probability that a target object belongs to a first category is a first probability, and a probability that the target object belongs to a second category is a second probability. When the first probability is the highest probability, a sum of the second probability and a false recognition probability may be used as a probability that the target object belongs to the second category. The false recognition probability described herein is a probability that a second-category target object is falsely recognized as a first-category target object by using the deep learning algorithm

Generally, a higher false recognition probability that a target object of one category is recognized as a target object of another category by using the deep learning algorithm indicates a higher new probability obtained by adjusting, based on the false recognition probability, a probability that the target object belongs to the another category.

In some other possible implementations, a probability of a category obtained through recognition may be adjusted based on a false recognition severity. The false recognition severity is a severity of an accident caused by controlling travelling of the intelligent vehicle based on a category obtained through false recognition when a target object of one category is recognized as a target object of another category. For example, in a result obtained through deep learning algorithm recognition, a probability that a target object belongs to a first category is a first probability, and a probability that the target object belongs to a second category is a second probability. When the first probability is the highest probability, a sum of the second probability and a value corresponding to the false recognition severity may be used as a probability that the target object belongs to the second category.

Generally, if a target object of one category is recognized as a target object of another category by using the deep learning algorithm, a higher severity of an accident caused by controlling travelling of a vehicle based on a category obtained through false recognition indicates a higher new probability obtained by adjusting, based on the false recognition severity, a probability that the target object belongs to the another category.

In some other possible implementations, a probability of a category obtained after the recognition may be adjusted based on the false recognition probability and the false recognition severity. For example, in a result obtained through deep learning algorithm recognition, a probability that a target object belongs to a first category is a first probability, and a probability that the target object belongs to a second category is a second probability. When the first probability is the highest probability, a product of the false recognition probability and the false recognition severity may be calculated, and a sum of the second probability and the product may be used as a probability that the target object belongs to the second category.

Generally, if a target object of one category is recognized as a target object of another category by using a deep learning algorithm, a higher false recognition probability that the target object of the one category is recognized as the target object of the another category by using the deep learning algorithm and a higher severity of an accident caused by controlling travelling of an intelligent vehicle based on a category obtained after false recognition indicate a higher new probability obtained by adjusting, based on the false recognition probability and the false recognition severity, a probability that the target object belongs to the another category.

In the intelligent vehicle control method in this application, data used to adjust a probability of a category obtained through recognition may be referred to as a probability adjustment parameter, for example, the false recognition probability, the false recognition severity, or the product of the false recognition severity and the false recognition probability.

In some possible implementations, the probability adjustment parameter may be obtained through calculation in advance, and deployed in the intelligent vehicle. In this way, when the probability of the category obtained through recognition needs to be adjusted, the probability may be adjusted by directly reading the pre-deployed probability adjustment parameter.

In some other possible implementations, the probability adjustment parameter may be calculated when the probability of the category obtained through recognition needs to be adjusted, to adjust the probability based on the probability adjustment parameter.

In this embodiment of this application, the probability of the category obtained through recognition may be referred to as a first recognition result, and a probability of the category obtained through adjustment is referred to as a second recognition result.

FIG. 2 is an example flowchart of a vehicle control method according to this application. As shown in FIG. 2, the method includes the following steps.

S210: Obtain a first recognition result of a target object, where the first recognition result includes: a first probability that the target object belongs to a first category and a second probability that the target object belongs to a second category, and the first probability is greater than the second probability.

In some possible implementations, before the first recognition result of the target object is obtained, a neural network and a probability adjustment parameter may be first obtained.

The following first describes how to obtain the neural network. In some possible implementations, in a design phase of a sensing unit of an automated driving system, a neural network that can satisfy an automated driving requirement may be selected.

For example, different neural networks may be selected for different recognized targets. For example, when the recognized target is an object, a faster region convolutional neural network (faster region convolutional neural network, FasterRCNN) may be selected. When the recognized target is a lane line, a residual neural network (residual neural network, Resnet) may be selected.

After the neural network is selected, training is performed on the neural network by using a training set. After training, a weight matrix (parameter) of the neural network may be obtained. The trained neural network may be deployed in an automated driving system of an intelligent vehicle.

The following describes how to obtain the probability adjustment parameter. In some implementations, the probability adjustment parameter may be obtained by performing the following several steps. It may be understood that an execution sequence of the following steps is only an example, and the execution sequence of the steps is not limited in this embodiment of this application.

Step 1: Obtain a false recognition probability of the neural network.

In actual application, an expected value of recognition accuracy of the trained neural network is 100%. However, due to limitations of the training set and limitations of the neural network, it is actually difficult for the recognition accuracy of the neural network obtained through training to achieve 100%. That is, there is a specific probability of false recognition by the neural network.

For example, when the FasterRCNN is selected as the neural network, an example of recognition accuracy of a trained FasterRCNN for different object categories is shown in Table 1.

**Table 1 Accuracy of a neural network**

| Target object | Recognition accuracy |
|---|---|
| Vehicle | 90.03% |
| Pedestrian | 69.58% |
| Bicycle | 68.84% |

When the false recognition probability of the neural network is obtained, a false recognition probability matrix fp[N] [N] may be defined. N is a total quantity of categories that can be recognized by the neural network, and fp[p][q] is a probability that a target object of a $p^{th}$ category is falsely recognized as a target object of a $q^{th}$ category, where p and q are index numbers of the categories, the index numbers may be from 1 to N, and p and q are both integers. In the defined false recognition probability matrix, an initial value of fp[p][q] may be set to -1 by default. Herein, -1 indicates that there is no probability of false recognition.

Then the trained neural network is tested by using a test set, to obtain the probability that the target object of the $p^{th}$ category is recognized as the target object of the $q^{th}$ category by the neural network, and a value of fp[p] [q] is updated to the probability.

Step 2: Obtain a false recognition severity.

With reference to the ISO 26262 Severity, the false recognition severity can be classified into the following four categories. A first category is no injury. A second category is a minor or moderate injury. A third category is a serious life-threatening injury (a survival rate is high). A fourth category is a fatal injury (a survival rate is unknown).

Furthermore, a severity matrix s[N][N] may be defined. N is a total quantity of categories that can be recognized by the neural network, and s[p][q] is a severity of an accident that may be caused by planning a route of the intelligent vehicle and controlling travelling of the intelligent vehicle based on a recognition result that a category of the target object is recognized as the $q^{th}$ category, where the recognition result is obtained by recognizing the category of the target object as the $q^{th}$ category while a real category of the target object is the $p^{th}$ category, and both p and q are positive integers less than or equal to N.

In the severity matrix s[N][N], the first category severity may be denoted as 0, the second category severity may be denoted as 1, the second category severity may be denoted as 2, and the third category severity may be denoted as 3.

Step 3: Obtain the probability adjustment parameter based on the false recognition severity and the false recognition probability.

A probability adjustment parameter matrix ω[N][N] may be defined. N is a total quantity of categories that can be recognized by the neural network, and ω[p][q] is a parameter that may be used to adjust a probability that the target object is of the $p^{th}$ category when the target object of the $p^{th}$ category is falsely recognized as a target object of the $q^{th}$ category, where both p and q are positive integers less than or equal to N. In the defined probability adjustment parameter matrix, an initial value of ω[p][q] may be set to 1 by default.

Then the probability adjustment parameter matrix is corrected based on the false recognition probability matrix and the false recognition severity matrix. For example, a corrected ω[p][q] may be calculated in a manner that is ω[p][q]=fp[p][q]*(s[p][q]*0.1+1). It may be understood that the calculation manner is merely an example. A manner in which the probability adjustment parameter matrix is corrected based on the false recognition probability matrix and the false recognition severity matrix is not limited in this embodiment of this application. For example, in the severity matrix s[N][N], the first category severity may be denoted as 0, the second category severity may be denoted as 0.1, the second category severity may be denoted as 0.2, the third category severity may be denoted as 0.3, and ω[p][q] may be equal to fp[p][q]*(s[p][q]+1).

After the probability adjustment parameter is obtained, the probability adjustment parameter may be deployed in the automated driving system of the intelligent vehicle.

The following describes how to obtain the first recognition result. In a travelling process of the intelligent vehicle, the target object is recognized by the neural network obtained through training, to obtain the first recognition result of the target object. The following uses the FasterRCNN as an example to describe how the neural network recognizes the target object.

The FasterRCNN includes a feature extraction (Extractor) module, a region proposal network (region proposal network, RPN) module, and a head (Head) module.

The feature extraction module may receive image data output by a sensor, and extract feature information of the image. An example of the feature extraction module is a residual network.

The RPN mainly provides a proposal region of the image based on input image data. Generally, 2,000 proposal boxes may be generated for each image.

The head module performs classification and regression on the image based on the proposal region output by RPN and a feature output by the feature extraction module, to obtain a category to which the target object in the image belongs. For example, the category to which the target object belongs is recognized as a person, a traffic sign, a motor vehicle, or the like, and a probability (a confidence level) that the target object belongs to each category is provided. When sorted by probabilities, the first M categories and probabilities corresponding to the first M categories may be referred to as top M recognition results, where M is a positive integer. The M categories and the corresponding probabilities are the first recognition result of the target object.

S220: Adjust the first recognition result to obtain a second recognition result of the target object, where the second recognition result includes: a third probability that the target object belongs to the second category; and the third probability is greater than the second probability.

In some possible implementations, a category 1 in the first recognition result (that is, the category with the highest probability) is used as the first category, each category other than the category 1 in the first recognition result (that is, a category on which probability adjustment is to be performed) is used as the second category, and the following steps are performed.

Step 1: Find a corresponding probability adjustment parameter in the probability adjustment parameter matrix based on index numbers of the first category and the second category. For example, when the index number of the first category is q and the index number of the second category is p, $\omega[p][q]$ in the probability adjustment parameter matrix is the corresponding probability adjustment parameter.

Step 2: Adjust the second probability based on the obtained probability adjustment parameter. For example, a corrected category probability may be calculated based on a formula $P3=P2*\omega[p][q]$, P3 represents a probability obtained through adjustment, and the probability is referred to as the third probability. P2 represents the second probability.

After the foregoing steps are performed, the corresponding probability of the first recognized category in the first recognition result, the corresponding probability of another recognized category in the first recognition result, and the updated corresponding probability may constitute the second recognition result.

S230: Control the vehicle based on the second recognition result.

In some implementations, all recognized categories in the second recognition result are sorted based on corresponding probabilities, and a final category of the target object is determined based on a sorting result. For example, the category with the highest probability is used as the final category of the target object.

After the final category of the target object is obtained, a route of the intelligent vehicle may be planned based on the final category, to control travelling of the intelligent vehicle. For example, the category of the target object may be fused with motion information of the target object that is detected by a millimeter-wave radar. Then whether the target object is a static object or a moving object, a distance between the target object and the intelligent vehicle, and whether there is a possibility of collision between the target object and the intelligent vehicle are determined based on fused information, to obtain a space in which the vehicle can drive (a safe space), and route planning for the intelligent vehicle can be performed.

In the method in this embodiment, the category probability obtained through neural network recognition is adjusted based on the false recognition probability of the neural network. A difference between the category probability obtained through false recognition and an accurate probability may be used to compensate the category probability obtained through neural network recognition, which helps improve accuracy of a probability of a category to which the target object belongs, improve accuracy of a route planned based on the probability of the category of the target object, and further improve travelling safety of the vehicle.

For example, a greater false recognition probability of the neural network indicates a greater probability adjustment parameter determined based on the false recognition probability and a greater compensation value for the category probability obtained through neural network recognition.

In the method in this embodiment, the category probability obtained through neural network recognition is adjusted based on a safety severity caused by false recognition of the neural network. For example, a higher false recognition severity indicates a higher compensation value for a corresponding category probability obtained through neural network recognition. In this way, the corresponding category probability can be increased as much as possible, so that a situation in which a target category error occurs because a probability of the corresponding category is not the highest probability when the corresponding category is the real category of the target object can be avoided, and travelling safety of the intelligent vehicle is improved.

It may be understood that, in the embodiment shown in FIG. 2, a manner of determining the probability adjustment parameter based on the false recognition probability and the severity caused by the false recognition is only an example. In the vehicle control method in this application, the probability adjustment parameter may be alternatively determined in another manner.

For example, the probability adjustment parameter may be determined only based on the severity caused by false recognition. To be specific, the probability of the category to which the target object belongs is adjusted based only on the severity caused by false recognition. For example, $\omega[p][q]=a*(s[p][q]*0.1+1)$, where a is a value preset based on experience.

For another example, the probability adjustment parameter may be determined based only on the false recognition probability. To be specific, the probability of the category to which the target object belongs is adjusted based only on the false recognition probability. For example, $\omega[p][q]=fp[p][q]*b$, where b is a value preset based on experience.

For another example, the first recognition result may be adjusted based on data collected by another sensor in the intelligent vehicle. For example, when the first category is the adolescent, and the first probability is 0.9; and the second category is the elderly, and the second probability is 0.8. If it is determined, based on the data collected by the another sensor, that a movement speed of the target object is slow, the value of the second probability may be increased.

It may be understood that, in the embodiment shown in FIG. 2, an implementation in which the probability adjustment parameter is obtained in advance and deployed in the intelligent vehicle, to adjust, based on the probability adjustment parameter, the probability of the category to which the target object belongs is only an example. In the vehicle control method in this application, the probability of the category to which the target object belongs may alternatively be adjusted in another manner.

For example, after the false recognition probability and the false recognition severity are obtained, the false recognition probability and the false recognition severity may be deployed in the intelligent vehicle. Then in a travelling process of the intelligent vehicle, the probability adjustment parameter is determined based on the false recognition probability and the false recognition severity.

It may be understood that, in the embodiment shown in FIG. 2, obtaining the first recognition result through neural network recognition is only an example. In the vehicle control method in this application, the first recognition result may alternatively be obtained in another manner.

The following describes an implementation of the vehicle control method in this application by using an example in which the neural network is the FasterRCNN used for target recognition in an image, the first category is a white cloud, and the second category is a truck compartment.

Step 1: Input a large quantity of training images to the FasterRCNN for training.

Step 2: Input a test image to the FasterRCNN, to test a false recognition probability obtained when the FasterRCNN classifies the image, and construct a false recognition probability matrix. The test image can be considered as an image that has not been input to the FasterRCNN during FasterRCNN training.

For example, the FasterRCNN can recognize 1,000 categories of objects. A false recognition probability matrix W with 1,000 rows and 1,000 columns is constructed. In the matrix, each row corresponds to one of the 1,000 categories, each column corresponds to one of the 1,000 categories, and fp[i][j] is a probability that an object of an $i^{th}$ category is recognized as an object of a $j^{th}$ category, where i is an integer less than or equal to 1000, and j is an integer less than or equal to 1000.

For example, if recognition accuracy of a truck compartment is 90%, the truck compartment is recognized as a white cloud at a false recognition probability of 10%. If recognition accuracy of a road sign is 90%, the road sign is recognized as a white cloud at a false recognition probability of 10%. To be specific, a false recognition probability of recognizing the truck compartment as a white cloud by the FasterRCNN is 0.1, and a false recognition probability of recognizing the road sign as a white cloud by the FasterRCNN is 0.1.

Step 3: Obtain a false recognition severity. Table 2 shows an example of false recognition severities.

**Table 2 False recognition severity**

| Harm number | Original object | Falsely recognized object | Severity |
|---|---|---|---|
| 001 | Truck compartment | White cloud | 3: fatal |
| 002 | White cloud | Truck compartment | 1: minor or moderate injury |
| 003 | Road sign | White cloud | 2: serious life-threatening injury |
| ... | ... | ... | ... |

Step 4: Construct a probability adjustment parameter matrix. For example, the FasterRCNN can recognize 1,000 categories of objects. A probability adjustment parameter matrix W with 1,000 rows and 1,000 columns is constructed. In the matrix, each row corresponds to one of the 1,000 categories, each column corresponds to one of the 1,000 categories, and w[i][j] is a probability adjustment parameter determined based on a false recognition probability and a false recognition severity that are caused by recognizing an object of an $i^{th}$ category as an object of a $j^{th}$ category, where i is an integer less than or equal to 1000, and j is an integer less than or equal to 1000.

It is assumed that the first row and the first column in the probability adjustment parameter matrix correspond to the truck compartment category, the second row and the second column correspond to the white cloud category, and the third row and the third column correspond to the road sign category.

Through analysis, if a truck compartment is falsely recognized as a white cloud, a severity in a highway pilot scenario is 3, a false recognition severity s is 3, and a false recognition probability fp is 0.1. A probability adjustment parameter 1.17 is calculated by substituting the values into a relational expression (1-fp)*(s*0.1+1). In this case, w[0][1] is equal to 1.17.

If a road sign is falsely recognized as a white cloud, a severity in the highway pilot scenario is 2, a false recognition severity s is 2, and a false recognition probability fp is 0.1. A probability adjustment parameter 1.08 is calculated by substituting the values into the relational expression (1-fp)*(s*0.1+1). In this case, w[2][1] is equal to 1.08.

Each element in the probability adjustment parameter matrix W can be obtained according to a similar method. An example of the probability adjustment parameter matrix W is shown in Table 3.

**Table 3 Probability adjustment parameter matrix**

|  | Truck compartment | White cloud | Road sign | ... |
|---|---|---|---|---|
| Truck compartment | 1 | 1.17 | 1.08 | ... |
| White cloud | 1.08 | 1 | 1.01 | ... |
| Road sign | 1.02 | 1.08 | 1 | ... |
| ... | ... | ... | ... | ... |

Step 5: Deploy the trained neural network and the obtained probability adjustment parameter on the intelligent vehicle.

Step 6: In a travelling process of the intelligent vehicle, a camera may collect an image of an environment in front of the vehicle, and the neural network of the intelligent vehicle inputs and recognizes the image. A first recognition result of a target object in the image is shown in Table 4.

**Table 4 First recognition result of the target object**

| Category | Probability |
|---|---|
| White cloud | 50% |
| Compartment | 45% |
| Road sign | 40% |

According to the recognition result, a first category of the target object is a white cloud, and a corresponding first probability is 50%, that is, $P_{white\ cloud}=0.5$; a second category of the target object is a compartment, and a corresponding second probability is 45%, that is, $P_{companment}=0.5$; and a third category of the target object is a road sign, and a corresponding probability is $P_{road\ sing}=40\%$.

Because the first probability that the target object is a white cloud is the highest, a probability adjustment parameter used when a compartment is falsely recognized as a white cloud is found from the probability adjustment parameter matrix stored in the intelligent vehicle, that is, 1.17 in w[0][1] is read, and a probability that the target object is the compartment is recalculated, to obtain $P'_{companment}=P_{companment}*W=0.45*1.17=0.5265$. A probability adjustment parameter used when a road sign is falsely recognized as a white cloud is found from a false recognition weight matrix, that is, 1.08 in w[2][1] is read, and a probability that the target object is a road sign is recalculated, to obtain $P'_{road\ sign}=P_{road\ sign}*W=0.40*1.08=0.432$.

In the probability that the target object is the white cloud, the probability that the target object is the compartment, and the probability that the target object is the road sign, because the probability that the target object is the compartment is 0.5265 that is greater than the probability that the target object is the white cloud and the probability that the target object is the road sign, it may be determined that the target category of the target object is the compartment.

In this scenario, once it is determined that the target object within a specific distance in front of the intelligent vehicle is a truck compartment, the automated driving system may be triggered to perform a braking operation, to avoid an accident.

According to the vehicle control method in this application, a route is not directly planned based on a recognition result of a deep learning algorithm to control travelling of an intelligent vehicle, but planned by adjusting the recognition result of the deep learning algorithm, to avoid a case in which a probability of a real category of a target object is less than a probability of another category of the target category. In this way, if the route is planned and travelling of the intelligent vehicle is controlled based on an adjusted recognition result, travelling safety of the intelligent vehicle can be improved.

In addition, according to the vehicle control method provided in this application, adjustment is performed on a result obtained through deep learning algorithm recognition, which has lower complexity, compared with adjustment to a model structure of a neural network and/or adjustment to training data of the neural network.

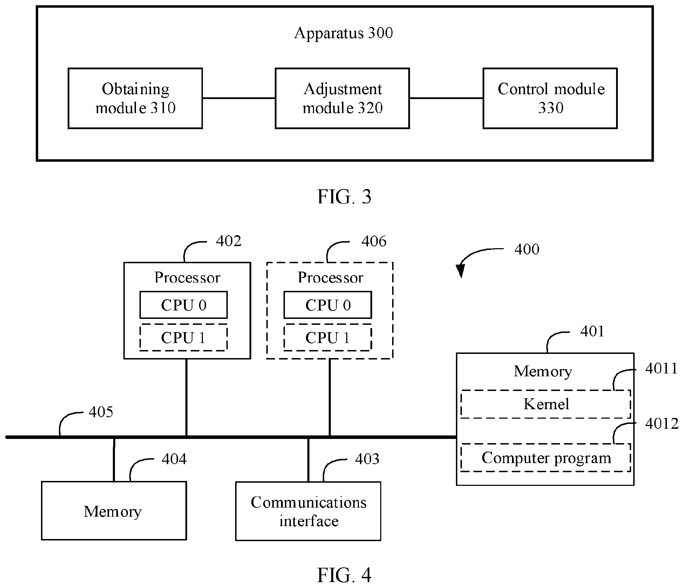

FIG. 3 is an example of a diagram of a structure of a vehicle control apparatus according to this application. The apparatus 300 includes an obtaining module 310, an adjustment module 320, and a control module 330. The apparatus 300 may implement the method shown in FIG. 2.

The obtaining module 310 is configured to obtain a first recognition result of a target object, where the first recognition result includes: a first probability that the target object belongs to a first category and a second probability that the target object belongs to a second category, and the first probability is greater than the second probability.

The adjustment module 320 is configured to adjust the first recognition result to obtain a second recognition result of the target object, where the second recognition result includes: a third probability that the target object belongs to the second category.

The control module 330 is configured to control the vehicle based on the second recognition result.

Optionally, the adjustment module 320 is further configured to adjust the first recognition result based on a preconfigured probability adjustment parameter.

Optionally, both the first probability and the second probability are probabilities obtained by classifying the target object by a neural network. The probability adjustment parameter is determined based on a first false detection probability and a first false detection severity, where the first false detection probability is a probability that the neural network classifies a second-category target object into the first category, and the first false detection severity is a severity level of a safety hazard caused by using the first category as a real category of the second-category target object to control the vehicle.

Optionally, both the first probability and the second probability are probabilities obtained by classifying the target object by a neural network, and the apparatus further includes a determining module.

The determining module is configured to determine a probability adjustment parameter based on a first false detection probability and a first false recognition severity, where the first false detection probability is a probability that the neural network classifies a second-category target object into the first category, and the first false detection severity is a severity level of a safety hazard caused by using the first category as a real category of the second-category target object to control the vehicle.

The adjustment module is further configured to adjust the first recognition result based on the probability adjustment parameter.

Optionally, the probability adjustment parameter, the first false detection probability, and the first false recognition severity satisfy the following relational expression:

$$\omega=(1-fp)*(s*0.1+1),$$

where

$\omega$ represents the probability adjustment parameter, fp represents the first false detection probability, and s represents the first false detection severity.

Optionally, the third probability, the probability adjustment parameter, and the second probability satisfy the following relational expression:

$$P_3=P_2*\omega,$$

where

$P_3$ represents the third probability, $P_2$ represents the second probability, and $\omega$ represents the probability adjustment parameter.

Optionally, the control module is further configured to: when the third probability in the second recognition result is greater than a probability that the target object belongs to another category, use the second category as a target category of the target object, and control the vehicle based on the target category.

It should be understood that the apparatus 300 in this embodiment of this application may be implemented through an application-specific integrated circuit (application-specific integrated circuit, ASIC), or may be implemented through a programmable logic device (programmable logic device, PLD). The PLD may be a complex programmable logic device (complex programmable logical device, CPLD), a field-programmable gate array (field-programmable gate array, FPGA), generic array logic (generic array logic, GAL), or any combination thereof. Alternatively, when the vehicle control method shown in FIG. 2 is implemented by using software, the apparatus 300 and the modules of the apparatus 300 may alternatively be software modules.

The apparatus 300 according to this embodiment of this application may correspondingly perform the method described in embodiments of this application. In addition, the foregoing and other operations and/or functions of each unit of the apparatus 300 are separately for implementing the corresponding procedures of each method in FIG. 2. For brevity, details are not described herein again.

This application further provides a controller 400 shown in FIG. 4. For example, the controller 400 may be the controller 120 in the intelligent vehicle 100 shown in FIG. 1. The controller 400 includes a processor 402, a communications interface 403, and a memory 404.

The processor 402, the memory 404, and the communications interface 403 can communicate with each other through a bus 405. The memory 404 stores executable code, and the processor 402 reads the executable code in the memory 404 to perform a corresponding method. The memory 404 may further include another software module, for example, an operating system, for running a process.

For example, the executable code in the memory 404 is used to perform the method shown in FIG. 2, and the processor 402 reads the executable code in the memory 404 to perform the method shown in FIG. 2.

The processor 402 may be a central processing unit (central processing unit, CPU). The memory 404 may include a volatile memory (volatile memory), for example, a random access memory (random access memory, RAM). The memory 404 may further include a non-volatile memory (2non-volatile memory, 2NVM), for example, a read-only memory (2read-only memory, 2ROM), a flash memory, a hard disk drive (hard disk drive, HDD), or a solid-state disk (solid state disk, SSD).

The bus 405 may further include a power bus, a control bus, a status signal bus, and the like, in addition to a data bus. However, for clear description, various types of buses in the figure are marked as the bus 405. Optionally, the bus 405 may alternatively be an in-vehicle Ethernet, a controller area network (controller area network, CAN) bus, or another internal bus.

Optionally, the controller 400 further includes a memory 401. The memory 401 may store a kernel 4041 and a computer program 7042, and the computer program 7042 may be executable code in the copied memory 404. The controller 400 further includes a processor 406. The processor 402 and the processor 406 may be processors of a same type or different types, and a quantity of processor cores in each processor does not constitute a limitation on this application.

It should be understood that the controller according to this embodiment of this application may correspond to the apparatus 300 in embodiments of this application, and may correspond to a corresponding body that performs the method shown in FIG. 2 in embodiments of this application. The foregoing and other operations and/or functions of each module in the controller 400 are separately used to implement the corresponding procedures of each method in FIG. 2. For brevity, details are not described herein again.

This application further provides an intelligent vehicle, and the intelligent vehicle includes the controller shown in FIG. 4.

All or some of the foregoing embodiments may be implemented by using software, hardware, firmware, or any combination thereof. When the software is used to implement the embodiments, all or some of the foregoing embodiments may be implemented in a form of a computer program product. The computer program product includes one or more computer instructions. When the computer program instructions are loaded or executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive (solid-state drive, SSD).

It may be clearly understood by a person skilled in the art that, for the purpose of convenient and brief descriptions, for a detailed working process of the foregoing system, apparatus, and unit, refer to a corresponding process in the foregoing method embodiments. Details are not described herein.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application should be subject to the protection scope of the claims.

## Claims

1. A vehicle control method, wherein the method comprises:

   obtaining a first recognition result of a target object, wherein the first recognition result comprises: a first probability that the target object belongs to a first category and a second probability that the target object belongs to a second category, and the first probability is greater than the second probability;
   adjusting the first recognition result to obtain a second recognition result of the target object, wherein the second recognition result comprises: a third probability that the target object belongs to the second category; and
   controlling a vehicle based on the second recognition result.

2. The method according to claim 1, wherein the adjusting the first recognition result comprises: adjusting the first recognition result based on a preconfigured probability adjustment parameter.

3. The method according to claim 2, wherein both the first probability and the second probability are probabilities obtained by classifying the target object by a neural network; and
the probability adjustment parameter is determined based on a first false detection probability and a first false detection severity, wherein the first false detection probability is a probability that the neural network classifies a second-category target object into the first category, and the first false detection severity is a severity level of a safety hazard caused by using the first category as a real category of the second-category target object to control the vehicle.

4. The method according to claim 1, wherein both the first probability and the second probability are probabilities obtained by classifying the target object by a neural network, and the method further comprises:

   determining a probability adjustment parameter based on a first false detection probability and a first false recognition severity, wherein the first false detection probability is a probability that the neural network classifies a second-category target object into the first category, and the first false detection severity is a severity level of a safety hazard caused by using the first category as a real category of the second-category target object to control the vehicle; and
   the adjusting the first recognition result comprises: adjusting the first recognition result based on the probability adjustment parameter.

5. The method according to claim 3 or 4, wherein the probability adjustment parameter, the first false detection probability, and the first false recognition severity satisfy the following relational expression:

$$\omega=(1-fp)*(s*0.1+1),$$

   wherein
   $\omega$ represents the probability adjustment parameter, fp represents the first false detection probability, and s represents the first false detection severity.

6. The method according to any one of claims 2 to 5, wherein the third probability, the probability adjustment parameter, and the second probability satisfy the following relational expression:

$$P_3=P_2*\omega,$$

   wherein
   $P_3$ represents the third probability, $P_2$ represents the second probability, and $\omega$ represents the probability adjustment parameter.

7. The method according to any one of claims 1 to 6, wherein the controlling a vehicle based on the second recognition result comprises:
   when the third probability in the second recognition result is greater than a probability that the target object belongs to another category, using the second category as a target category of the target object, and controlling the vehicle based on the target category.

8. A vehicle control apparatus, wherein the apparatus comprises:

   an obtaining module, configured to obtain a first recognition result of a target object, wherein the first recognition result comprises: a first probability that the target object belongs to a first category and a second probability that the target object belongs to a second category, and the first probability is greater than the second probability;
   an adjustment module, configured to adjust the first recognition result, to obtain a second recognition result of the target object, wherein the second recognition result comprises: a third probability that the target object belongs to the second category; and
   a control module, configured to control a vehicle based on the second recognition result.

9. The apparatus according to claim 8, wherein the adjustment module is further configured to adjust the first recognition result based on a preconfigured probability adjustment parameter.

10. The apparatus according to claim 9, wherein both the first probability and the second probability are probabilities obtained by classifying the target object by a neural network; and
the probability adjustment parameter is determined based on a first false detection probability and a first false detection severity, wherein the first false detection probability is a probability that the neural network classifies a second-category target object into the first category, and the first false detection severity is a severity level of a safety hazard caused by using the first category as a real category of the second-category target object to control the vehicle.

11. The apparatus according to claim 8, wherein both the first probability and the second probability are probabilities obtained by classifying the target object by a neural network; the apparatus further comprises a determining module, wherein

the determining module is configured to determine a probability adjustment parameter based on a first false detection probability and a first false recognition severity, wherein the first false detection probability is a probability that the neural network classifies a second-category target object into the first category, and a first false detection severity is a severity level of a safety hazard caused by using the first category as a real category of the second-category target object to control the vehicle; and
the adjustment module is further configured to adjust the first recognition result based on the probability adjustment parameter.

12. The apparatus according to claim 10 or 11, wherein the probability adjustment parameter, the first false detection probability, and the first false recognition severity satisfy the following relational expression:

$$\omega=(1-fp)*(s*0.1+1),$$

wherein
$\omega$ represents the probability adjustment parameter, fp represents the first false detection probability, and s represents the first false detection severity.

13. The apparatus according to any one of claims 9 to 12, wherein the third probability, the probability adjustment parameter, and the second probability satisfy the following relational expression:

$$P_3=P_2*\omega,$$

wherein
$P_3$ represents the third probability, $P_2$ represents the second probability, and $\omega$ represents the probability adjustment parameter.

14. The apparatus according to any one of claims 8 to 13, wherein
the control module is further configured to: when the third probability in the second recognition result is greater than a probability that the target object belongs to another category, use the second category as a target category of the target object, and control the vehicle based on the target category.

15. A controller, wherein the controller comprises a processor and a memory, wherein

the memory stores computer instructions; and
the processor executes the computer instructions, to implement the steps of the method according to any one of claims 1 to 7.

16. An intelligent vehicle, wherein the intelligent vehicle comprises a controller, and the controller is configured to perform any function of the controller according to claim 15.

Intelligent vehicle 100

Sensing device 110

Camera
111

Millimeter-wave
radar 112

Laser radar
113

Ultrasonic radar
114

Controller 120

Sensing unit
121

Planning unit
124

Vehicle control
system 130

FIG. 1

S210: Obtain a first recognition result of a target object, where the first recognition result includes: a first probability that the target object belongs to a first category and a second probability that the target object belongs to a second category, and the first probability is greater than the second probability

S220: Adjust the first recognition result to obtain a second recognition result of the target object, where the second recognition result includes: a third probability that the target object belongs to the second category; and the third probability is greater than the second probability

S230: Control the vehicle based on the second recognition result

FIG. 2

Apparatus 300

| Obtaining module 310 | Adjustment module 320 | Control module 330 |

FIG. 3

Processor 402
CPU 0
CPU 1

Processor 406
CPU 0
CPU 1

400

Memory 401
Kernel 4011
Computer program 4012

405

Memory 404

Communications interface 403

FIG. 4

## INTERNATIONAL SEARCH REPORT

| | International application No. |
|---|---|
| | **PCT/CN2020/123797** |

**A. CLASSIFICATION OF SUBJECT MATTER**

B60W 30/09(2012.01)i; B60W 30/095(2012.01)i; B60W 60/00(2020.01)i

According to International Patent Classification (IPC) or to both national classification and IPC

**B. FIELDS SEARCHED**

Minimum documentation searched (classification system followed by classification symbols)

B60W; G06K; G06N

Documentation searched other than minimum documentation to the extent that such documents are included in the fields searched

Electronic data base consulted during the international search (name of data base and, where practicable, search terms used)

CNKI, CNPAT, WPI, EPODOC, 华为, 李怀洲, 识别, 类别, 神经网络, 卷积, 分类, 校正, 车辆, 自动驾驶, 概率, neural, network, net, identify, vehicle, car, automatic, drive, probability, convolution, sort, regimentation

**C. DOCUMENTS CONSIDERED TO BE RELEVANT**

| Category* | Citation of document, with indication, where appropriate, of the relevant passages | Relevant to claim No. |
|---|---|---|
| PX | CN 111114541 A (HUAWEI TECHNOLOGIES CO., LTD.) 08 May 2020 (2020-05-08) claims 1-16 | 1-16 |
| A | CN 109934293 A (SOOCHOW UNIVERSITY) 25 June 2019 (2019-06-25) description, paragraphs 108-121, figures 1-10 | 1-16 |
| A | CN 109886199 A (BAIDU ONLINE NETWORK TECHNOLOGY (BEIJING) CO., LTD.) 14 June 2019 (2019-06-14) entire document | 1-16 |
| A | CN 107585099 A (FORD GLOBAL TECHNOLOGIES, LLC.) 16 January 2018 (2018-01-16) entire document | 1-16 |
| A | CN 105574550 A (BEIJING DEEPGLINT TECHNOLOGY LIMITED) 11 May 2016 (2016-05-11) entire document | 1-16 |
| A | CN 110378191 A (SOUTHEAST UNIVERSITY) 25 October 2019 (2019-10-25) entire document | 1-16 |
| A | US 2014292502 A1 (DENSO CORP.) 02 October 2014 (2014-10-02) entire document | 1-16 |

☑ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 January 2021** | **27 January 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2020/123797**

**C.    DOCUMENTS CONSIDERED TO BE RELEVANT**

| Category* | Citation of document, with indication, where appropriate, of the relevant passages | Relevant to claim No. |
|---|---|---|
| A | US 2019256088 A1 (INTEL CORPORATION) 22 August 2019 (2019-08-22)<br>entire document | 1-16 |

Form PCT/ISA/210 (second sheet) (January 2015)

## EP 4 082 850 A1

| INTERNATIONAL SEARCH REPORT | | | | | International application No. |
|---|---|---|---|---|---|
| Information on patent family members | | | | | **PCT/CN2020/123797** |

| Patent document cited in search report | | | Publication date (day/month/year) | Patent family member(s) | | | Publication date (day/month/year) |
|---|---|---|---|---|---|---|---|
| CN | 111114541 | A | 08 May 2020 | None | | | |
| CN | 109934293 | A | 25 June 2019 | None | | | |
| CN | 109886199 | A | 14 June 2019 | None | | | |
| CN | 107585099 | A | 16 January 2018 | US | 10150414 | B2 | 11 December 2018 |
| | | | | DE | 102017115011 | A1 | 11 January 2018 |
| | | | | RU | 2017124100 | A | 09 January 2019 |
| | | | | US | 2018009378 | A1 | 11 January 2018 |
| | | | | GB | 2554503 | A | 04 April 2018 |
| | | | | RU | 2017124100 | A3 | 29 May 2019 |
| | | | | GB | 201710965 | D0 | 23 August 2017 |
| | | | | RU | 2708469 | C2 | 09 December 2019 |
| | | | | MX | 2017008971 | A | 10 September 2018 |
| CN | 105574550 | A | 11 May 2016 | CN | 105574550 | B | 12 April 2019 |
| CN | 110378191 | A | 25 October 2019 | None | | | |
| US | 2014292502 | A1 | 02 October 2014 | JP | 6022983 | B2 | 09 November 2016 |
| | | | | US | 9290178 | B2 | 22 March 2016 |
| | | | | DE | 102014103579 | A1 | 02 October 2014 |
| | | | | JP | 2014197326 | A | 16 October 2014 |
| US | 2019256088 | A1 | 22 August 2019 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201911409229X